# EUROPÄISCHE PATENTSCHRIFT

(11) **EP 1 999 164 B1**
(45) Veröffentlichungstag und Bekanntmachung des Hinweises auf die Patenterteilung: **28.10.2009**
(21) Anmeldenummer: 07801202.8
(22) Anmeldetag: 01.08.2007
(51) Int. Cl.: C08F 2/44, C08F 292/00, C08J 3/24, C08K 9/04, C09C 1/30, C09C 3/08, C09C 3/12, C09D 7/12, C09D 151/10, C08J 5/00

(54) **NANOFÜLLSTOFFE, NANOKOMPOSITE AUS EINEM ORGANISCHEN BINDEMITTEL UND NANOFÜLLSTOFFEN, VERFAHREN ZU IHRER HERSTELLUNG UND IHRE VERWENDUNG**
NANOFILLERS, NANOCOMPOSITES COMPOSED OF AN ORGANIC BINDER AND NANOFILLERS, PROCESS FOR THEIR PRODUCTION AND THEIR USE
NANOCHARGES, NANOCOMPOSITE COMPRENANT UN LIANT ORGANIQUE ET DES NANOCHARGES, SON PROCÉDÉ DE FABRICATION ET SON UTILISATION

(30) Priorität: 24.08.2006 DE 102006039638
(43) Veröffentlichungstag der Anmeldung: 10.12.2008
(73) Patentinhaber: Fraunhofer-Gesellschaft zur Förderung der Angewandten Forschung e.V., 80686 München (DE)
(72) Erfinder: HARTWIG, Andreas, 27721 Ritterhude (DE); SEBALD, Monika, 27721 Ritterhude (DE); TRAUTMANN, Jasmin, 28211 Bremen (DE); RISCHKA, Klaus, 21255 Torstedt (DE)
(74) Vertreter: Ostermann, Dirk
(86) Internationale Anmeldenummer: PCT/DE2007/001364
(87) Internationale Veröffentlichungsnummer: WO 2008/022614

(56) Entgegenhaltungen:
- EP-A- 1 174 446
- EP-A- 1 464 675
- WO-A-2004/024811
- WO-A-2005/077321
- LIU, QING; DING, JIANG; CHAMBERS, DAPHNE E.; DEBNATH, SUBIR; WUNDER, STEPHANIE L.; BARAN, GEORGE R.: "Filler-coupling agent-matrix interactions in silica/polymethylmethacrylate composites" JOURNAL OF BIOMEDICAL MATERIALS RESEARCH PART A, Bd. 57, Nr. 3, 5. Dezember 2001 (2001-12-05), Seiten 384-393, XP002461693 WILEY, HOBOKEN, NY, US in der Anmeldung erwähnt
- DATABASE CA [Online] CHEMICAL ABSTRACTS SERVICE, COLUMBUS, OHIO, US; 19. September 2001 (2001-09-19), KISO, SADANORI ET AL: "Antifogging abrasion-resistant flexible coating materials" XP002461694 gefunden im STN Database accession no. 2001:840470 -& JP 2001 316626 A (SEIKOH CHEMICALS CO., LTD., JAPAN) 16. November 2001 (2001-11-16)
- DATABASE CA [Online] CHEMICAL ABSTRACTS SERVICE, COLUMBUS, OHIO, US; 23. April 2004 (2004-04-23), OTA, MASARU: "Silane coupling agents and coated inorganic fillers for resin compositions with good fluidity, moldability, and adhesion" XP002461695 gefunden im STN Database accession no. 2004:330382 -& JP 2004 124000 A (SUMITOMO BAKELITE CO., LTD., JAPAN) 22. April 2004 (2004-04-22)
- J. FALBE; M. REGITZ (HRSG.): "Römpp Chemie Lexikon, Bd. 5, 9. Auflage, Eintrag "Ruß"" 1992, GEORG THIEME VERLAG STUTTGART, NEW YORK , STUTTGART , XP002474288 Seite 3943 - Seite 3944
- J. FALBE; M. REGITZ (HRSG.): "Römpp Chemie Lexikon, Bd. 3, 9. Auflage, Eintrag "Kolloidchemie"" 1990, GEORG THIEME VERLAG STUTTGART, NEW YORK , STUTTGART , XP002474310 Seite 2299 - Seite 2304

## Beschreibung

### Technisches Gebiet

Die Erfindung betrifft ein Verfahren zur Herstellung von Kompositen aus oberflächenmodifizierten Nanofüllstoffen und polymeren Bindemitteln.

### Stand der Technik

Nach dem Stand der Technik werden Nanokomposite entweder mit Hilfe des sogenannten Sol-Gel-Verfahrens oder durch mechanisches Einarbeiten von agglomerierten Nanofüllstoffen erhalten.

Beim Sol-Gel-Verfahren werden Alkoxysilane hydrolysiert und die gebildeten Silanole kondensieren unter der Abspaltung von Wasser langsam zu Partikeln mit Durchmessern von einigen Nanometern. Wenn hierbei Tetraalkoxysilane eingesetzt werden, bilden sich unfunktionalisierte Nanopartikel aus Siliciumdioxid. Die Synthese von Partikeln erfolgt in erster Linie durch den Stöber Prozess (W. Stöber, J. Coll. Interf. Sci. 26 (1968) 62). Beim Einsatz von Trialkoxysilanen mit einer weiteren funktionellen Gruppe, tragen die entstehenden Nanopartikel die entsprechenden funktionellen Gruppen. Diese Gruppen sind dann bei geeigneter Wahl in der Lage, mit einer organischen Matrix zu reagieren. Bei geeigneter Wahl der Reaktionspartner ist es auch möglich, die Synthese der Nanopartikel direkt in der organischen Matrix durchzuführen.

Hauptnachteile dieses Verfahrens zur Herstellung von Nanokompositen sind die hohen Rohstoffkosten, da die gesamten Partikel aus dem teuren Silan hergestellt werden, und die schwierige Prozessführung. Die resultierenden Partikel haben dafür eine sehr einheitliche Größenverteilung, was bei den meisten Anwendungen aber nicht von Bedeutung ist.

Auf der anderen Seite können Komposite aus agglomerierten Nanopartikeln in einer organischen Matrix hergestellt werden. Der am häufigsten verwendete agglomerierte Nanofüllstoff ist flammpyrolytisch hergestelltes Siliciumdioxid. Es lassen sich aber aufgrund der großen Wechselwirkung der Teilchen untereinander nur geringe Füllgrade erreichen und das Material hat einen großen Einfluss auf das Fließverhalten der modifizierten organischen Matrix. Üblicherweise wird das flammpyrolytisch hergestellte Siliciumdioxid daher als

Thixotropiermittel eingesetzt.

Die WO 2004/024811 A2 beschreibt, dass eine bessere Benetzung der Oberfläche der agglomerierten Nanofüllstoffe erreicht werden kann, indem eine Oberflächenbehandlung mit Silanen in Lösungsmittel erfolgt. Die DE 198 46 660 A1 offenbart, dass diese Reaktion in der Anwesenheit von Säure durchgeführt werden kann. Beide Wege der Oberflächenmodifikation führen zu einer geringeren rheologischen Aktivität der behandelten Nanofüllstoffe und zu einer Zerteilung der Agglomerate im organischen Bindemittel. Bei der Modifikation der Nanopulver ohne Zusatz von Säure werden strukturell andersartige Partikeloberflächen erhalten als bei der Modifikation mit Säurekatalyse.

Basen wie Alkalihydroxide und Ammoniak sind in der Lage, die Hydrolyse von Silanen und die Kondensation der entstehenden Silanole zu katalysieren. Bei der Partikelmodifikation wurden Basen wie Amine, Tetraalkylammoniumhydroxide oder Pyridin als Katalysatoren eingesetzt. Q. Liu et al. (J. Biomed. Mat. Res. 57 (2001) 384-393) untersuchten die Oberflächenmodifikation von pyrogener Kieselsäure mit Methacryloxypropyltrimethoxysilan in Gegenwart von Triethylamin in Alkoholen oder Aceton als Lösemittel. Insgesamt ist der Anteil stark gebundenen Silans auf den Partikeloberflächen gering, d.h. bei der thermogravimetrischen Untersuchung der modifizierten Partikel wird der größte Teil der Oberflächenmodifikation bereits bei Temperaturen um 100°C abgespalten. Zudem wird festgestellt, dass bei Zusatz des Katalysators Triethylamin eine geringere Silanbelegung der Partikel erfolgt als ohne Zusatz des Katalysators.

Bei der Verwendung von Aminosilanen sind Aminogruppen als intrinsisch potenziell katalytisch wirksame Gruppen vorhanden. Es wird darüber spekuliert, dass diese der Grund für die schnellere Reaktion der Aminosilane im Vergleich zu anderen Silanen darstellen. Demzufolge wurden in der DE 43 44 577 A1 Alkylamine mit 3-6 Kohlenstoffatomen als Katalysator für die Oberflächenmodifikation von Silica eingesetzt.

Es wurde aber auch gefunden, dass basische Bedingungen nachteilig sein können, da im basischen die Kondensation der hydrolysierten Silane untereinander gegenüber der Reaktion mit Partikeloberflächen bevorzugt abläuft (L. Chu et al., Chem. Mat. 9, 1997, 2577-2582). Dies wurde am Beispiel des Glycidoxypropyltrimethoxysilans untersucht.

### Beschreibung der Erfindung

Der vorliegenden Erfindung liegt das technische Problem zugrunde, die Nachteile des Stands der Technik zu überwinden und Nanokomposite aus Nanopartikeln in einer organischen

Matrix bereitzustellen, die gegenüber dem Stand der Technik verbesserte mechanische Eigenschaften aufweisen, und bevorzugt einen hohen Anteil fest auf der Oberfläche gebundene funktionelle Gruppen tragen. Diese Gruppen sollten in der Lage sein, chemische Bindungen oder starke Wechselwirkungen (z.B. van-der-Waals-Bindungen oder Wasserstoffbrückenbindungen) mit der Bindemittel-Matrix einzugehen.

Diese Aufgabe wird gelöst durch das Verfahren gemäß Anspruch 1. Unteransprüche geben vorteilhafte Weiterbildungen an.

Zur Überwindung des Standes der Technik werden zur Herstellung der erfindungsgemäßen Nanokomposite kommerziell erhältliche agglomerierte Nanopulver in einem organischen Medium dispergiert und an der Oberfläche mit einem Silan, Titanat und/oder Zirkonat organisch modifiziert. Für diese Reaktion werden sehr starke Basen als Katalysatoren eingesetzt, die einen pk_{BH}⁺-Wert in Acetonitril von größer 19 im Falle acyclischer und größer 15 im Falle cyclischer Basen haben.

In den weiteren Schritten wird direkt die Dispersion der modifizierten Nanopartikel in dem organischen Medium verwendet oder bevorzugt ein als organisches Medium eingesetztes Lösemittel abgezogen und dann das trockene Nanopulver in ein organisches Bindemittel eingearbeitet. Die bevorzugte Methode der Lösungsmittelentfernung vor der Einarbeitung der Nanopulver in das organische Bindemittel ist die Trocknung bei vermindertem Druck, z.B. am Rotationsverdampfer oder in einem Rührreaktor.

Durch diese Verfahrensweise hergestellte Nanopartikel weisen eine organische Oberflächenbeschichtung auf, die hohe Anteile stark gebundener Moleküle enthält. Üblicherweise sind mehr als 30 Gew.-%, bevorzugt mehr als 50 Gew.-% und besonders bevorzugt mehr als 70 Gew.-% des Silans, Titanats und/oder Zirkonats so fest an die Oberfläche der Nanofüllstoffe gebunden, dass sie bei der thermogravimetrischen Analyse erst bei Temperaturen über 150°C abgespalten werden. Es wird davon ausgegangen, dass diese Anteile chemisorbiert sind und kovalente Bindungen untereinander und mit der Partikeloberfläche eingehen.

Weiterhin werden bei der erfindungsgemäßen Oberflächenbehandlung die Agglomerate der eingesetzten Nanofüllstoffe dauerhaft soweit zerkleinert, dass transparente Nanokomposite herstellbar sind. Unter Nanokomposit werden erfindungsgemäß Mischungen aus einem Bindemittel oder einer polymeren Matrix und organisch modifizierten Nanofüllstoffen verstanden. Die üblicherweise von Nanofüllstoffen gebildeten Agglomerate werden dabei soweit zerteilt, dass mindestens 60 % bevorzugt mindestens 80% der Agglomerate einen Teilchendurchmesser von kleiner 300 nm aufweisen. In den meisten Fällen gelingt es sogar Einzelteilchen und Agglomerate mit Durchmessern von kleiner 100 nm zu erzielen. Die mittlere Partikelgröße ist üblicherweise kleiner oder gleich 250 nm, bevorzugt kleiner oder gleich 200 nm und besonders bevorzugt kleiner oder gleich 180 nm.

Ferner wird durch die erfindungsgemäß eingesetzten Basen erreicht, dass keine Reaktion der funktionellen Gruppen des zur Oberflächenmodifikation verwendeten Silans, Titanats oder Zirkonats bei der Oberflächenmodifierungsreaktion erfolgt. Erfindungsgemäß wird also ein ungewünschter Verlust reaktiver Gruppen wie Epoxidgruppen nicht oder nur in geringem Ausmaß auftreten.

Erfindungsgemäß ist im Vergleich zu Nanopartikeln, die im neutralen oder in saurer Lösung oberflächenmodifiziert wurden, der Anteil fest an der Oberfläche gebundenen (also chemisorbierten) Modifizierungsreagenzes höher als der von lediglich physisorbiertem Oberflächenmodifikationsreagenz. Zudem werden die funktionellen Gruppen an der Oberfläche der Partikel nicht beeinflusst und stehen für die Ausbildung von Bindungen mit dem Bindemittel zur Verfügung. Überraschenderweise hat sich gezeigt, dass sich hierdurch die Eigenschaften der polymeren Matrices in die die Partikel eingearbeitet werden in höherem Maße verbessern lassen als dies mit Partikeln nach dem Stand der Technik möglich ist.

Schließlich weisen gegenüber konventionell hergestellten Kompositen aus Bindemitteln und Füllstoffen die erfindungsgemäßen Systeme die mit Nanofüllstoffen einhergehenden Vorteile auf. Dies sind die Möglichkeit transparente aber trotzdem gefüllte Komposite zur Verfügung zu stellen und eine Verbesserung der mechanischen und thermischen Eigenschaften. Auf der anderen Seite heben sich die erfindungsgemäßen Komposite von den sogenannten Sol-Gel-Materialien durch eine vereinfachte Herstellung, universellere Einsetzbarkeit und die Möglichkeit, trockene Nanofüllstoffe zur Verfügung zu stellen, ab.

Überraschend hat sich gezeigt, dass die Anbindung der Silane an die Füllstoffpartikel bei Wahl starker nicht ionischer Basen basenkatalysiert ist. Der negativ dekadische Logarithmus der Säurekonstante der protonierten Base (pk_{BH}⁺) in Acetonitril muss größer oder gleich 19 im Falle acyclischer Basen und größer oder gleich 15 im Falle anderer Basen sein. Unter einer cyclischen Base wird hierbei eine Base verstanden, bei der das basische Zentrum in einem Ring sitzt. Bei den zur Katalyse eingesetzten Basen handelt es sich insbesondere um nichtionische, organische sterisch gehinderte Basen. Bevorzugt handelt es sich um cyclische oder nicht cyclische Amidine, cyclische oder nicht cyclische Guanidine, Aminoiminophosphorane (wie sie z.B. in der WO02/079139 A1, S.7 genannt sind) und die sogenannten Schwesinger-Basen bzw. Phosphazenbasen. Ferner sollte die nicht ionische Base bevorzugt einen pk_{BH}⁺-Wert, der größer oder gleich 20 ist aufweisen und wird üblicherweise einen pk_{BH}⁺- Wert von 35 nicht übersteigen. Weiterhin geeignet sind auch aromatische, cyclische, bicyclische oder polycyclische Amine, wobei tertiäre Amine bevorzugt sind. Ganz besonders geeignete Basen sind DBU, TBD, DBN, TMG und/oder BEMP.

Durch die Menge des eingesetzten Silans, Titanats und/oder Zirkonats bezogen auf den Füllstoff lässt sich die an die Partikeloberflächen gebundene (chemisorbierte) Menge des Modifizierungsreagenzes einstellen. Wenn die eingesetzte Menge des Modifizierungsreagenzes so klein ist, dass weniger als 0,5 g je 100 g unmodifiziertem Füllstoff gebunden sind, werden üblicherweise keine vorteilhaften Veränderungen in dem späteren Komposit gefunden. Die gebundene Organik sollte bevorzugt größer 5g/100g unmodifiziertes Nanopulver und besonders bevorzugt ist eine Menge größer 20g/100g unmodifiziertes Nanopulver sein. Auch durch die Menge des eingesetzten Katalysators lässt sich die gebundene, insbesondere die chemisorbierte Silan-, Titanat- oder Zirkonatmenge beeinflussen. Um eine ausreichende katalytische Wirkung zu erhalten, sollten bevorzugt mehr als 0,1 mol-% der erfindungsgemäßen nicht ionischen Base, besonders bevorzugt mehr als 1 mol-% bezogen auf das Silan, Titanat bzw. Zirkonat, eingesetzt werden.

Bei den als Ausgangsstoff einzusetzenden agglomerierten Nanopulvern handelt es sich bevorzugt um oxidische oder nitridische Verbindungen, welche insbesondere flammpyrolytisch oder durch Fällen hergestellt wurden. Aber auch agglomerierte Nanofüllstoffe auf anderer Basis, wie z.B. Bariumsulfat oder Bariumtitanat sind geeignet. Bevorzugt werden Oxide und

Silikate eingesetzt, ganz besonders bevorzugt flammpyrolytisch hergestelltes oder gefälltes Siliciumdioxid. Besonders geeignet sind weiterhin Nanofüllstoffe mit einer BET-Oberfläche von größer 15 m²/g, noch bevorzugter 20 m²/g, ganz besonders bevorzugt 50 m²/g.

Die organische Modifikation der Oberfläche in dem Lösemittel erfolgt durch Behandeln mit einem Silan, Titanat oder Zirconat. Diese haben bevorzugt die allgemeine Formel E(OR')ₙR₄₋ₙ, wobei E das Element Si, Ti oder Zr ist. Hierbei ist n = 1, 2 oder 3, bevorzugt ist n=3.

Bei der über den Sauerstoff gebundenen Gruppe R' handelt es sich um eine beliebige organische funktionelle Gruppe, bevorzugt eine verzweigte, unverzweigte oder cyclische Alkylgruppe und besonders bevorzugt Methyl, Ethyl oder Isopropyl. Diese Gruppen werden während der organischen Modifizierung in Form des Alkohols zumindest teilweise abgespalten.

Das Modifizierungsreagenz der allgemeinen Formel E(OR')ₙR₄₋ₙ, kann genau eine Silan-, Titanat- und/oder Zirconat-Gruppe enthalten; in Einzelfällen sind aber auch Modifizierungsreagenzien mit zwei oder mehreren derartigen Gruppen denkbar.

Die Gruppe R ist eine beliebige organische Gruppe. Diese beliebige organische Gruppe enthält bevorzugt mindestens eine funktionelle organische Gruppe R", die über einen Linker Z (der wiederum eine beliebige organischen Gruppe ist) an das Zentralatom E (Si, Ti oder Zr) gebunden ist.

Die beliebige organische Gruppe R enthält dabei bevorzugt 2 bis 20 Kohlenstoffatome. Wenn n = 2 oder 3 ist, können die Gruppen R gleich oder verschieden sein. R wird so ausgewählt, dass die funktionelle organische Gruppe R" mit dem zur Herstellung des Nanokomposits verwendeten Monomeren kovalente Bindungen, Wasserstoffbrückenbindungen und/oder van-der-Waals-Bindungen eingehen kann.

Der Linker Z ist an das Zentralatom E gebunden; bevorzugt enthält Z 1 bis 15 Kohlenstoffatome (besonders bevorzugt 2 bis 6 Kohlenstoffatome). Weiterhin enthält Z bevorzugt eine verzweigte, unverzweigte oder cyclische Alkyl-Gruppe und/oder eine aromatische und/oder olefinische Gruppe oder besteht aus einer unverzweigten oder cyclischen Alkyl-Gruppe und/oder einer aromatischen und/oder olefinischen Gruppe. Dieser Linker kann gegebenenfalls auch ein oder mehrere Heteroatome enthalten (z.B. in Form von einer oder mehreren Ether-, Ester-, Amid- oder Thioethergruppen oder heterocyclischen aromatischen Gruppen).

Die funktionelle organische Gruppe R" wird bevorzugt ausgewählt aus der Gruppe bestehend aus Acrylaten, Methacrylaten, Epoxiden, Aminen, Carbonsäuren, Thiolen, Alkoholen, Olefinen mit reaktiven Doppelbindungen, Isocyanaten, Trialkylsilylgruppen und Gruppen, die van-der-Waals- oder Wasserstoffbrückenbindungenmit dem Bindemittel eingehen können, insbesondere substituierten oder unsubstituierten Phenylgruppen.

Das erfindungsgemäß eingesetzte Bindemittel wird bevorzugt ausgewählt aus der Gruppe bestehend aus acrylat- oder methacrylatbasierten Bindemitteln, epoxidbasierten Bindemitteln, Bindemitteln, die Styrol oder einen ungesättigten Polyester enthalten oder hieraus bestehen, Bindemitteln, die Isocyanatgruppen enthalten und Bindemitteln, die Silikon enthalten oder hieraus bestehen.

Um den Vernetzungsgrad der organischen Modifikation auf der Partikeloberfläche zu erhöhen, kann das oberflächenmodifizierte Siloxan, Titanat oder Zirkonat mit Tetraalkoxysilanen, -titanaten oder -zirkonaten kombiniert werden. Der molare Anteil der letzteren Komponenten beträgt dabei bevorzugt weniger als 50 mol-% des Oberflächenmodifikationsreagenzes.

Für die Herstellung von Nanokompositen auf der Basis von Acrylaten oder Methacrylaten enthält R als funktionelle organische Gruppe R" bevorzugt eine Acrylat- oder Methacrylat-gruppe. Besonders bevorzugt ist R eine Acrylat- oder Methacrylatgruppe der Formeln -(CH₂)₃-S-(CH₂)₂-C(=O)O-(CH₂)ₙ-OC(=O)-CH=CH₂ mit n=1 bis 12 und/oder -(CH₂)₃-OC(=O)-C(CH₃)=CH₂.

Für die Herstellung von Nanokompositen auf der Basis von Epoxiden enthält R als funktionelle organische Gruppe R" bevorzugt eine Epoxidgruppe oder eine Amino-, Carbonsäure-, Thiol- oder Alkoholgruppe die mit einer Epoxidgruppe reagieren können. Besonders bevorzugt ist R 2-(3,4-Epoxycyclohexyl)ethyl, 3-Glycidoxypropyl, 3-Aminopropyl und/oder 3-Mercaptopropyl.

Bei der Herstellung von Nanokompositen auf der Basis ungesättigter Polyester oder styrolhaltiger Harze enthält R als funktionelle organische Gruppe R" bevorzugt eine reaktive Doppelbindung. Besonders bevorzugt ist R bei dieser Anwendung Vinyl, Styryl oder Phenyl oder enthält eine Vinyl-, Styryl- oder Phenylgruppe. Phenyl ist hierbei ein Beispiel für eine nicht reaktive Gruppe R'", die aber mit dem Bindemittel in Wechselwirkung treten kann.

Zur Herstellung von Nanokompositen auf der Basis von Urethanen, Polyharnstoffen oder anderen auf Isocyanaten basierenden Polymersystemen enthält R als funktionelle organische Gruppe R" bevorzugt eine Isocyanat-, Amino-, Alkohol-, Thiol- oder Carbonsäuregruppe. Besonders bevorzugt ist R in diesem Fall 3-Isocyanatopropyl-, 3-Aminopropyl und 3-Mercaptopropyl.

Zur Herstellung von Nanokompositen, die Silikon als Bindemittel enthalten, enthält R als funktionelle organische Gruppe R" eine hydrophobe Gruppierung, insbesondere eine Methyl-, Dimethyl- oder Trimethylsilylgruppe. Bevorzugt werden Nanofüllstoffe eingesetzt, an deren Oberfläche funktionelle Gruppen gebunden sind, die eine chemische Reaktion mit dem Silikon eingehen können, also insbesondere Si-H-Bindungen oder Doppelbindungen sowie funktionelle Gruppen, mit denen funktionelle Gruppen des als Bindemittel eingesetzten Silikon reagieren können bzw. funktionelle Gruppen, die mit den funktionellen Gruppen des als Bindemittel eingesetzten Silikon identisch sind.

Bei dem organischen Medium in dem die Modifikation der Nanofüllstoffe durchgeführt wird, handelt es sich bevorzugt um ein polar aprotisches Lösemittel, insbesondere ein Keton, einen Ester oder einen Ether, und besonders bevorzugt um Aceton, Butanon, Essigsäureethylester, Methylisobutylketon, Tetrahydrofuran, Methyl-tert-butylether und Diisopropylether. In derartigen Lösungsmitteln tritt eine stärkere Deagglomeration der oberflächenmodifizierten Nanopartikel als beispielsweise in Alkoholen ein.

Weiterhin ist die direkte Modifikation in den zur Herstellung der Nanokomposite zu verwendenden organischen Bindemitteln eine besonders bevorzugte Verfahrensweise. In diesem Fall sind die zu polymerisierenden Monomere als Einzelkomponenten oder als Formulierung das zu verwendende organische Medium.

Katalytische Mengen Wasser zwischen 0,01 Gew.-% und 5 Gew.-%, besonders bevorzugt zwischen 0,01 Gew.-% und 1 Gew.-% sollten bei der organischen Modifikation der Nanofüllstoffe bevorzugt anwesend sein. Hierdurch kann der Vernetzungsgrad der Oberflächenmodifikation und damit die Partikeleigenschaften gesteuert werden. Dieses Wasser ist an den Oberflächen der als Ausgangsstoff verwendeten agglomerierten Nanofüllstoffe in der Regel bereits als Adsorbat vorhanden. Hinzu kommen die Wasserspuren, die in dem bei der Modifikation verwendeten organischen Medium üblicherweise enthalten sind. Zur Unterstützung der Reaktion kann weiteres Wasser zugegeben werden, jedoch haben sich molare Mengen, die mehr als das 1,2-fache der in der Reaktionsmischung enthaltenen Alkoxygruppen der Modifizierungsreagenzien E(OR')ₙR₄₋ₙ als ungünstig herausgestellt.

Um den Zerfall der Agglomerate bei der organischen Modifizierung in dem organischen Medium, insbesondere dem organischen Lösemittel, zu beschleunigen, kann vor oder während der Modifizierung ein zusätzlicher mechanischer Energieeintrag mit den üblichen Methoden erfolgen. Dies kann z.B. durch Ultraschall, einen Hochgeschwindigkeitsrührer, einem Dissolver, eine Perlmühle oder einen Rotor-Stator-Mischer erfolgen. Bei der Verwendung höherviskoser organischer Medien ist dies die bevorzugte Vorgehensweise, also besonders dann, wenn das organische Bindemittel zur Herstellung der Nanokomposite direkt als organisches Medium verwendet wird. Wenn das Bindemittel nicht als organisches Medium verwendet wird, kann das zu verwendende Bindemittel direkt mit der Dispersion des organisch modifizierten Nanofüllstoffes in dem organischen Lösemittel gefüllt werden. In diesem Fall wird das Lösemittel nach der Herstellung der Mischung aus Bindemittel und organisch modifiziertem Nanofüllstoff abgezogen oder erst bei der späteren Anwendung des Nanokomposits aus Bindemittel und Nanofüllstoff. Letzteres ist besonders bei lösemittelhaltigen Lacken auf der Basis der erfindungsgemäßen Nanokomposite eine praktikable Vorgehensweise. Bevorzugt wird der organisch modifizierte Nanofüllstoff aber von dem Lösemittel befreit und als trockenes Pulver weiter verarbeitet. In diesem Fall wird dann das trockene organisch modifizierte Nanopulver zu dem Bindemittel gegeben und unter mechanischem Energieeintrag eingearbeitet. Die Einarbeitung kann z.B. durch Ultraschall, einen Hochgeschwindigkeitsrührer, einen Dissolver, einer Perlmühle, einen Walzenstuhl oder einen Rotor-Stator-Mischer erfolgen.

Bei der Herstellung von Nanokompositen mit Thermoplasten als Bindemittel wird bevorzugt der organisch modifizierte Nanofüllstoff in die dem Thermoplasten zugrunde liegenden Monomere eingearbeitet. Anschließend werden diese Monomere konventionell polymerisiert, wobei die erfindungsgemäßen Nanokomposite resultieren. Beispielsweise wird der organisch modifizierte Nanofüllstoff in Methylmethacrylat eingearbeitet. Bei der anschließenden Polymerisation resultiert ein gefülltes Polymethylmethacrylat. Im Gegensatz zu konventionell gefülltem Polymethylmethacrylat ist dieses aber transparent und hat gegenüber dem ungefüllten Material verbesserte mechanische Eigenschaften (beispielsweise Kratz-, Zug- und Biegefestigkeit). Als weiteres Beispiel sei ein Nanokomposit auf der Basis von Polystyrol als Bindemittel genannt. In diesem Fall wird der organisch modifizierte Nanofüllstoff in Styrol eingearbeitet und dann konventionell polymerisiert. Wenn bei der Modifizierung der Nanofüllstoffe ein Siloxan, Titanat oder Zirconat eingesetzt wird, bei dem die Gruppe R mit dem Monomer zusammen polymerisieren kann, ist das gebildete Nanokomposit vernetzt. Die organisch modifizierten Nanopartikel wirken in diesem Fall als Vernetzerpartikel. Wenn die Gruppen R nicht mit dem Monomer reagieren können, ist der gebildete Nanokomposit thermoplastisch. Die modifizierten Nanopartikel lassen sich aber auch gut in die Schmelze von Thermoplasten einarbeiten. Dies geschieht besonders effektiv mit einem Extruder bzw. Doppelschneckenextruder. So lässt sich eine Polystyrolschmelze effektiv durch einextrudieren von mit Phenyltriethoxysilan in Butanon unter Katalyse mit DBU behandelter pyrogener Kieselsäure modifizieren.

Für viele Anwendungen werden Polymerdispersionen benötigt. Durch Einarbeiten der erfindungsgemäßen oberflächenmodifizierten Nanofüllstoffe in das den Polymerdispersionen zugrunde liegende Monomer, Dispergieren dieser Monomer / Nanofüllstoffmischung in Wasser unter Zusatz eines Tensids und anschließende Dispersions- oder Emulsionspolymerisation lassen sich mit Nanofüllstoffen modifizierte Polymerdispersionen herstellen. Die Oberflächenmodifikation des Nanofüllstoffs erfolgt dabei bevorzugt direkt in dem Monomer bzw. Monomergemisch. Bei der Verwendung eines Silans zur Oberflächenmodifikation, welches eine einpolymerisierbare Gruppe enthält, lassen sich die Nanopartikel chemisch an das gebildete Polymer binden. Selbstverständlich lassen sich hier beliebige Abstufungen zwischen Silanen mit reaktiven und nicht reaktiven Gruppen vornehmen. Mit dem beschriebenen Verfahren lässt sich z.B. mit Nanopartikeln modifiziertes Polystyrollatex oder auch Polystyrol-co-butadienlatex durch Einarbeiten von pyrogener Kieselsäure unter gleichzeitiger Oberflächenbehandlung mit Phenyltriethoxysilan in das Monomer, Dispergieren des gefüllten Monomers in Wasser unter Zusatz eines Tensids und anschließender thermischer Polymerisation mit Hilfe eines radikalischen Initiators herstellen. Bei der Herstellung eines Latex aus Butylacrylat mit Nanopartikeln, die reaktive Methacrylatgruppen enthalten, werden die Latexpartikel partiell vernetzt. Der Vernetzungsgrad und damit die kohäsiven und adhäsiven Eigenschaften dieser typischerweise als Haftklebstoff eingesetzten Latices lassen sich durch die Nanofüllstoffmenge und den Anteil reaktiver Gruppen auf der Oberfläche einstellen. Bei der Verwendung nicht reaktiver Silane als Oberflächenmodifikationsreagenz würde entsprechend nicht vernetztes Latex entstehen, bei welchem die Eigenschaften lediglich durch van-der-Waals- und Wasserstoffbrückenbindungen zwischen Partikeln und Polymermatrix eingestellt werden.

Bei sekundären Dispersionen wird analog der erfindungsgemäße Nanofüllstoff in das der Dispersion zugrunde liegende Polymer eingearbeitet und anschließend wie mit dem nicht modifizierten Polymer die Dispersion hergestellt.

Mit Nanofüllstoffen modifizierte Dispersionen werden bevorzugt für wasserbasierte Lacke, Beschichtungen und Klebstoffe - insbesondere Kontakt- und Haftklebstoffe - eingesetzt. Für die gleichen Anwendungen werden oftmals auch lösemittelbasierte Polymerzubereitungen benötigt. Diese lassen sich entweder durch Einarbeiten der modifizierten Nanofüllstoffe bzw. Modifikation der Nanofüllstoffe in der fertigen Polymerlösung zur Verfügung stellen. Andererseits kann aber auch im Monomer oder der Monomer / Lösemittel-Mischung modifiziert und erst anschließend polymerisiert werden.

Die erfindungsgemäßen organisch modifizierten Nanofüllstoffe können bei der Herstellung der Nanokomposite alleine oder als Kombination stofflich unterschiedlicher Nanofüllstoffe oder unterschiedlicher Partikelgrößenverteilung eingesetzt werden. Um besonders hohe Füllgrade erreichen zu können, empfiehlt es sich, Nanofüllstoffe unterschiedlicher Teilchengrößenverteilung zu kombinieren und gegebenenfalls sogar Mikrofüllstoffe zuzusetzen. Des Weiteren können die erfindungsgemäßen Nanokomposite die für polymere Materialien üblichen Zusatzstoffe wie Antioxidanzien, Verlaufsmittel, Dispergierhilfsmittel, Farbstoffe, Pigmente, weitere Füllstoffe oder Stabilisatoren enthalten.

Bei der Kombination der erfindungsgemäßen Partikel mit Partikeln aus elastomeren Polymeren hat sich überraschenderweise eine starke synergistische Wirkung bei der Verbesserung der mechanischen Eigenschaften der als Matrix verwendeten Polymere gezeigt. Als Elastomere sind beispielsweise Partikel aus Polyisopren, Polybutadien oder Polydimethylsiloxan geeignet. Bevorzugt haben diese Elastomerpartikel einen mittleren Durchmesser von kleiner 10 µm und besonders bevorzugt von kleiner 0,5 µm. Ganz besonders bevorzugt weisen die Elastomerpartikel einen mittleren Durchmesser zwischen 10 und 500 nm auf (Partikelgröße mittels dynamischer Lichtstreuung ermittelt). Die synergistische Wirkung ist besonders groß, wenn die Elastomerpartikel ebenso wie die erfindungsgemäßen Partikel an der Oberfläche funktionelle Gruppen tragen, die mit dem polymeren Bindemittel chemische Bindungen, bevorzugt kovalente Bindungen eingehen können. Geeignete funktionelle Gruppen sind beispeilsweise die Gruppen, die oben bei den oberflächenmodifizierten Nanofüllstoffen genannt wurden.

Die Härtung der Mischung aus organisch modifizierten Nanofüllstoffen und organischem Bindemittel erfolgt mit den für das jeweilige Bindemittel üblichen Methoden. Dies ist typischerweise eine thermische Reaktion bei Raumtemperatur oder erhöhter Temperatur, Reaktion mit der Luftfeuchte oder eine UV- oder Elektronenstrahlhärtung.

Bei der Herstellung der erfindungsgemäßen Nanokomposite werden - sofern ein Lösungsmittel als organisches Medium verwendet wird - die oberflächenmodifizierten Nanofüllstoffe als Zwischenprodukt erhalten. Selbstverständlich sind alle vorteilhaften Ausgestaltungen des Verfahrens zur Herstellung der Nanokomposite auch -jeweils einzeln oder in beliebiger Kombination - vorteilhafte Ausgestaltungen des Verfahrens zur Herstellung der oberflächenmodifizierten Nanokomposite.

Die erfindungsgemäßen Nanokomposite lassen sich besonders vorteilhaft in Form von Klebstoffen, Vergussmassen, Lacken, Beschichtungen und Kunststoffformteilen anwenden.

Bei der Anwendung als Lack ist der besondere Vorteil der erfindungsgemäßen Nanokomposite die gegenüber den ungefüllten Lacken und Lacken, die Nanopartikel nach dem Stand der Technik enthalten, verbesserte Kratz- und Abriebfestigkeit. Gleichzeitig bleibt die Transparenz erhalten. Diese Eigenschaftskombination ist besonders beim Einsatz von Decklacken z.B. für die Automobillackierung und bei Parkettlacken gefragt. Ein anderer Einsatzfall ist das Lackieren transparenter Kunststoffe, insbesondere Polymethylmethacrylat, Polycarbonat und

Polystyrol, um die Kratzfestigkeit der Oberfläche zu verbessern, ohne die Transparenz zu beeinträchtigen.

Bei der Anwendung der erfindungsgemäßen Nanokomposite als kratzfester Lack ist ein Füllstoffgehalt zwischen 1 und 80 Gew.-%, bevorzugt zwischen 5 und 50 Gew.-% und besonders bevorzugt zwischen 20 und 50 Gew.-%, geeignet. Derartige Lacke sind besonders dazu geeignet, Autoscheiben aus Kunststoff, bevorzugt aus Polycarbonat, kratzfest auszurüsten. Eine weitere bevorzugte Anwendung der erfindungsgemäßen Nanokomposite sind Parkettlacke. Die Härtung der Lacke erfolgt bevorzugt thermisch induziert durch Polyaddition, durch oxidative Trocknung oder durch UV induzierte Polymerisation. Zur Kratzfestausstattung von Kunststoffteilen kann aber auch das gesamte Bauteil aus den erfindungsgemäßen Nanokompositen bestehen oder schichtartig aus ungefülltem Kunststoff und dem Nanokomposit aufgebaut sein.

Im Fall hydrophober weicher Beschichtungen, z.B. Silikonbeschichtungen auf den unterschiedlichsten Substraten (z.B. Trägerpapiere, Folien, Kunststoffbauteile), lassen sich durch die erfindungsgemäßen modifizierten Nanopartikel sowohl die Oberflächenhaftung (z.B. gegenüber Verunreinigungen oder Haftklebstoffen), als auch die mechanischen Eigenschaften (z.B. Abrieb, Festigkeit) modifizieren. Dies hat insbesondere auch einen Einfluss auf die Haptik des Polymers und lässt sich damit bevorzugt an Griffen und anderen mit den Händen berührten Gegenständen anwenden. Um eine Einbindung der Nanopartikel in das Polymernetzwerk zu erreichen, empfiehlt es sich, dass diese sowohl rein hydrophobe (insbesondere -Si(CH₃)₃), als auch reaktive Gruppen tragen (z.B. Vinyl im Falle durch Hydrosilan Addition an Doppelbindungen vernetzende Silikone).

Bei der Anwendung der erfindungsgemäßen Nanokomposits als Vergussmassen und

Klebstoffe ist insbesondere die Verbesserung der mechanischen Eigenschaften wie Festigkeiten und Bruchdehnung von Bedeutung. Eine besondere Form von Vergussmassen bzw. Klebstoffen werden im Dentalbereich benötigt. Sowohl beim Füllen und Verblenden von Zähnen, als auch bei der Anfertigung von Prothesen u.ä. werden besonders abrieb- und mechanisch belastbare polymere Werkstoffe benötigt. Diese lassen sich mit den erfindungsgemäßen Nanokompositen zur Verfügung stellen. Die bevorzugte Basis derartiger Materialien sind die nach dem Stand der Technik bekannten reaktiven Materialien. Insbesondere sind Methacrylate und Acrylate zu nennen. Die Härtung erfolgt bevorzugt photochemisch, wozu geeignete Photoinitiatoren (z.B. Campherchinon) zugesetzt werden.

Die mechanischen, thermischen und thermomechanischen Eigenschaften von Polymerschäumen lassen sich durch die erfindungsgemäßen oberflächenmodifizierten Nanopartikel in hohem Maße einstellen. So lässt sich Sitzcomfort von Sitzen aus Polyurethanschäumen ebenso einstellen wie die Impactfestigkeit von Leichtbaupanelen die mit Phenolharzschäumen gefüllt sind.

Wenn die Partikel zum Oberflächenschutz, z.B. in Lacken eingesetzt werden, kann eine Anreicherung der Partikel an der Lackoberfläche und damit besonders große Wirksamkeit dadurch erzielt werden, dass neben den reaktiven Gruppen solche Gruppen auf die Oberfläche der Partikel gebunden werden, die zu einer niedrigen Oberflächenspannung führen. Der Segregationsgrad der Partikel an die Oberfläche lässt sich durch den Anteil dieser Gruppen auf der Partikeloberfläche einstellen. Beispielsweise können hierbei Verbindungen der Formel Si(OR"')ₘR""₄₋ₘ, mit m = 1, 2 oder 3, eingesetzt werden. Bei R"' handelt es sich um eine beliebige organische funktionelle Gruppe, insbesondere eine Alkylgruppe wie Methyl, Ethyl oder Isopropyl. R"" ist eine Fluoralkylgruppe oder eine Alkylgruppe, z.B. Methyl.

Die erfindungsgemäßen Nanokomposite können weiterhin vorteilhaft im Flugzeugbau, in der Elektronik, zur Automobillackierung und zum Lackieren transparenter Kunststoffe (z.B. Autoscheiben aus Polycarbonat) eingesetzt werden.

### Beispiele

Im Rahmen der vorliegenden Anmeldung werden folgende Messgrößen verwendet:
- Basenstärke in Acetonitril
- Degradationstemperatur
- g chemisorbiertes Silan/Titanat/Zirconat pro 100g Füllstoff (z.B. SiO₂)
- Gesamtmenge adsorbiertes Silan/Titanat/Zirconat pro 100g Füllstoff (z.B. SiO₂) [g]
- mittlere Partikelgröße
- Relative Breite der Partikelgrößenverteilung
- Zug-Scher-Festigkeit [MPa], bestimmt in Anlehnung an DIN EN 1465
- Schälwiderstand [N/mm], bestimmt in Anlehnung an DIN EN 1464
- BET-Bestimmung, bestimmt gemäß DIN ISO 9277

Die Basenstärke in Acetonitril wurde gemäß I. Kaljurand et al. in J. Org. Chem. 70, 2005, 1021 durch spektrophotometrische Titration bestimmt.

Degradationstemperatur, die Masse chemisorbierten Silans/Titanats/Zirconats pro 100g Füllstoff (in g) und die Gesamtmenge adsorbierten Silans/Titanats/Zirconats pro 100g Füllstoff (in g) wurden mittels Thermogravimetrischer Analyse (TGA) bestimmt.

Hierbei wurde das thermische Abbauverhalten der unmodifizierten und modifizierten Partikel und der Siliziumdioxidgehalt auf der Thermowaage TGA 2950 der Firma TA Instruments verfolgt. Es wurden Aluminiumtiegel verwendet. Die Messungen wurden standardmäßig bei Raumluft durchgeführt. Die dynamischen Messungen wurden mit einer Heizrate von 10 K/min in einem Temperaturbereich von 25-800 °C durchgeführt.

Die Degradationstemperatur ist das Peakmaximum des erhaltenen Spektrums (Gew.-%/°C). Die Gesamtmenge adsorbierten Silans/Titanats/Zirconats kann aus der Gesamtmenge abgespaltener Komponenten berechnet werden, wobei zu berücksichtigen ist, dass (da das Oberflächenmodifikationsreagenz auch Si, Ti oder Zr enthält) nicht die gesamte Oberflächenbelegung thermisch abgespalten wird, sondern nur die organischen Komponenten.

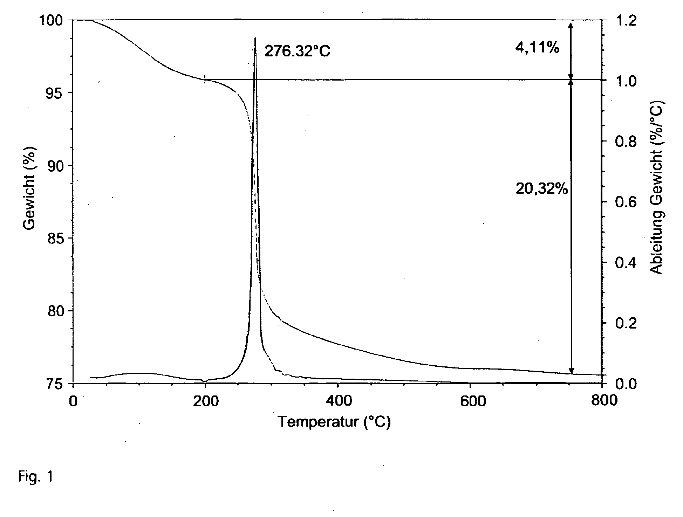

Die Masse chemisorbierten Silans/Titanats/Zirconats wird erhalten aus dem Masseverlust während der Messung. Üblicherweise liegt die Grenze zwischen den beiden Maxima (also zwischen chemisorbiertem und nicht chemisorbiertem Silan/Titanat/Zirconat) zwischen 150°C und 200 °C. Fig.1 zeigt das TGA-Diagramm von Aerosil 200, gemäß den nachfolgenden Beispielen modifiziert mit GLYMO in Anwesenheit von DBU (50g Aerosil 200, 24 g GLYMO, 3,6 mol-% DBU bezogen auf GLYMO).

Partikelgröße, Partikelgrößenverteilung und relative Breite der Partikelgrößenverteilung wurden für die oberflächenmodifizierten Nanofüllstoffe mittels dynamischer Lichtstreuung gemäß folgenden Literaturstellen bestimmt: L.B. Aberle et al. in Phys. Chem. Chem. Phys. 1999, 1, 3917-3921; L.B. Aberle et al in. Applied Optics 1998, 37, 6511-6524.

In der vorliegenden Anmeldung werden folgende Abkürzungen verwendet:

| Abkürzung | Verbindung | Formel |
|---|---|---|
| AMEO | 3-Aminopropyltrimethoxy-silan | |
| BEMP | 2-tert-Butylimino-2-diethylamino-1,3-dimethyl-perhydro-1,3,2-diazaphosphorin | |
| DBN | 1,5-Diazabicyclo[4.3.0]non-5-en | |
| DBU | 1,8-Diazabicyclo[5.4.0]-undec-7-en] | |
| EE | Essigsäureethylester | |
| GLYMO | Glycidoxypropyltrimethoxysilan | |
| MEK | Butanon | |
| MEMO | Methacryloxypropyltrimethoxysilan | |
| MI | 1-Methylimidazol | |
| MP | N-Methylpiperidin | |
| MTBE | Methyl-tert-butylether | |
| TBD | 1,5,7-Triazabicyclo[4.4.0]dec-5-en | |
| TEA | Triethylamin | |
| TMAH | Tetramethylammonium-hydroxid | |
| TMG | 1,1,3,3-Tetramethylguanidin | |
| TMG₃P=N-butyl | TMG₃P=N-butyl | 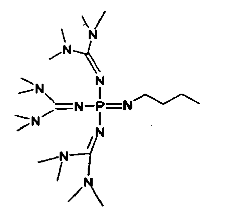 |

Ohne Einschränkung der Allgemeinheit wird die Erfindung nachfolgend anhand von mehreren Beispielen näher erläutert.

### Beispiel 1 - Herstellen eines Nanokomposits aus einem Epoxidharz mit einem modifizierten Nanofüllstoff:

### a) Organische Modifikation des Nanopulvers

Es werden zu 50 g Aerosil 200 500 g 2-Butanon hinzugefügt. Anschließend wird 0,7 g DBU als Katalysator zugegeben. Nach Zugabe des Katalysators wird 15 Minuten gewartet bis 30,3 g GLYMO über einen Tropftrichter zugetropft wird, Die dünnflüssige Suspension wird insgesamt 48 h gerührt. Das 2-Butanon wird langsam (ca. 8 h) am Rotationsverdampfer bei einer Badtemperatur von 35 °C entfernt.

### b) Herstellen eines Masterbatches in Epoxidharz

Es wird ein Masterbatch mit 25 Gew.-% des modifizierten Füllstoffes in dem Epoxidharz Araldit GY 250 (Huntsman) hergestellt. 10 g des gemäß a) modifizierten Nanopulvers werden unter Rühren mit dem Dispermaten CA 40 C bei 1- 2 m/s in mehreren Portionen in 30 g des Epoxidharzes gegeben. Zwischen den Zugaben wurde mit 8 m/s dispergiert. Insgesamt wurde der Ansatz 8,5 h mit einer Umfanggeschwindigkeit von 8 m/s (125 ml Gefäß, 30 mm Ø Dissolverscheibe) dispergiert. Es resultiert ein transparentes Harzsystem, dass bei Bedarf mit weiterem Harz auf die gewünschte Füllstoffkonzentration verdünnt wird.

### c) Thermische Härtung des Epoxidharzes

5 g des gemäß b) hergestellten Masterbatches wird mit 11,9 g des Epoxidharzes verdünnt und 8,17 g Polypox P 250 (UPPC) als aminisches Härtungssystem zugefügt. Anschließend wird die Probe in einer Aluminiumschale ausgegossen und 60 min bei 65°C gehärtet. Es resultiert ein transparentes Polymer.

### Beispiel 2 - Modifikation eines flammpyrolytisch hergestellten Siliziumdioxids mit verschiedenen Basen als Katalysator:

Bei diesem Versuch wurde die katalytische Wirkung verschiedener starker Basen verglichen. 50g Aerosil 200 wurde in 500 g Butanon suspendiert, die Base in der entsprechenden molaren Menge bezogen auf die eingesetzten 128 mmol GLYMO zugesetzt, anschließend die 30,3 g GLYMO über einen Tropftrichter langsam zugetropft und die Mischung 16 h gerührt. Danach wurde das Butanon am Rotationsverdampfer vollständig abgezogen. Der Füllstoff fiel als poröse Klumpen an, die sich mit einem Mörser leicht zerkleinern ließen.

| | a | b | c | d | e |
|---|---|---|---|---|---|
| Base | BEMP | DBN | DBU | TBD | TEA (Vergleich) |
| mol% (Base) | 2,0 | 3,6 | 3,6 | 3,6 | 5,4 |
| Basenstärke (^{MeCN}pK_{BH}⁺) | 27,6 | 23,89 | 24,33 | 25,98 | 18,46 |
| Degradationstemperatur | 193°C | 299°C | 276°C | 276°C | 235°C |
| Partikelgröße | 166 nm | 218 nm | 173 nm | 183 nm | 207 nm |
| g chemisorb. Silan pro 100g SiO₂ | 21 | 21 | 27 | 23 | 8 |

Das Beispiel zeigt, dass das erfindungsgemäße Vorgehen zu hohen Anteilen stark gebundenen Silans auf der Oberfläche führt. Diese Anteile werden mit dem nach dem Stand der Technik bekannten Katalysator Triethylamin (TEA) auch bei erhöhter Katalysatormenge nicht erreicht.

### Beispiel 3 - Einfluss der Basenmenge und der Art des Katalysators auf die oberflächenmodifizierten Partikel

Es wird wie in Beispiel 2 vorgegangen, jedoch werden unterschiedliche Mengen des Katalysators DBU verwendet und es werden Vergleichsversuche ohne Katalysator und mit Essigsäure als saurem Katalysator nach dem Stand der Technik durchgeführt. Die Eigenschaften der erhaltenen Partikel sind in folgender Tabelle zusammen gefasst.

| | a | b | c | d | e |
|---|---|---|---|---|---|
| | 8 mol-% Essigsäure bez. auf GLYMO (Vergleich) | ohne Katalysator (Vergleich) | 1,2 mol-% DBU bez. auf GLYMO | 2,4 mol-% DBU bez. auf GLYMO | 3,6 mol-% DBU bez. auf GLYMO |
| Chemisorbiertes Silan /100g pyrogene Kieselsäure | 8 g | 11 g | 9,2 g | 19,4 g | 27 g |
| Gesamtmenge adsorbiertes Silan / 100g pyrogene Kieselsäure [g] | 47 g | 41 g | 13 g | 32 g | 32 g |
| Degradations- temperatur | 230°C | 220°C | 261°C | 265°C | 276°C |
| Partikelgröße | 245 nm | 249 nm | 150 nm | 158 nm | 173 nm |
| Relative Breite der Partikelgrößenverteilung | 55,4 % | 50% | 56,8% | 42,4% | 46% |

Der Versuch zeigt, dass sich die an der Partikeloberfläche angebundene Silanmenge durch die Katalysatormenge einstellen lässt. Der chemisorbierte Anteil ist höher als bei den Vergleichsvarianten und die Zersetzungstemperatur ist bei den erfindungsgemäßen Partikeln höher. Fig. 1 zeigt das TGA-Diagramm von Aerosil 200 modifiziert mit GLYMO in Anwesenheit von DBU (50g Aerosil 200, 24 g GLYMO, 3,6 mol-% DBU bezogen auf GLYMO, hergestellt analog Beispiel 2)

### Beispiel 4 - Einfluss der Partikel auf Klebfestigkeiten

### a) Präparation der Materialien und Klebstoffe

Aluminiumfügeteile aus AlMg3 wurde in folgender Weise nach dem Stand der Technik vorbehandelt:

### Bad 1: Tauchreinigen

In einem 1,5 I Becherglas wird 64,5 g P3-Upon 5800 und das Benetzungsmittel 3,6 g Ridosol 1561 eingewogen und auf 1500 g Gesamtmenge mit destilliertem Wasser aufgefüllt. Die alkalische Lösung wird unter Rühren auf 60 °C erwärmt. Die Aluminiumfügeteile werden 180 Sekunden in die Lösung getaucht und im Anschluss mit einer ausreichenden Menge destilliertem Wasser gespült.

### Bad 2: Beizpassivieren

In einem 1,5 I Becherglas wird 35,7 g Alodine 2040 eingewogen und auf 1500 g Gesamtmenge mit destilliertem Wasser aufgefüllt. Die saure Lösung wird unter Rühren auf 40 °C erwärmt. Die Aluminiumfügeteile werden 60 Sekunden in die Lösung getaucht und im Anschluss mit einer ausreichenden Menge destilliertem Wasser gespült und bei 150°C für 300 Sekunden im Umluftofen getrocknet.

Mit entsprechend vorbehandelten Blechen werden Zug-Scher-Versuche in Anlehnung an DIN EN 1465 und Schälversuche in Anlehnung an DIN EN 1464 durchgeführt.

### Epoxidklebstoff mit Härter Polyamidoamin

Die Referenzformulierung besteht anteilig aus 4,14 g Araldit GY 250 und 2,12 g Polypox P 250. Die jeweiligen Partikelzusätze werden als Masterbatch (25 Gew.% Partikel, 75 Gew.% Araldit GY 250, Herstellung wie in Beispiel 1 b) zugegeben und die jeweilige Härtermenge dem Epoxidequivalent angepasst. Es werden Klebfilmdicken von etwa 0,2mm auf die Fügeteile aufgetragen und die Klebverbindungen bei 65 °C eine Stunde im Umluftofen ausgehärtet.

### b) Einfluss unterschiedlich modifizierter Partikel auf die Klebfestigkeit

Es wurden Klebstoffe mit jeweils 5 Gew.-% mit GLYMO modifizierter Nanopartikel nach den jeweils angegebenen Beispielen präpariert und die Zug-Scher-Festigkeiten gemessen:

| Katalysator bei Partikelmodifikation | nach Beispiel | Zug-Scher-Festigkeit [MPa] |
|---|---|---|
| Referenz, ohne Partikel (Vergleich) | - | 13,5 ± 1,6 |
| unkatalysierte Reaktion (Vergleich) | 3b | 16,6 ± 1,7 |
| sauer katalysiert (Vergleich) | 3a | 12,9 ± 1,3 |
| TEA (Vergleich) | 2e | 14,4 ± 1,3 |
| TBD | 2d | 16,8 ± 1,9 |
| BEMP | 2a | 17,0 ± 2,1 |
| 3,6 mol-% DBU | 3e | 18,4 ± 1,7 |
| 1,2 mol-% DBU | 3c | 16,2 ± 0,8 |

Folgende Schälfestigkeiten wurden erhalten:

| | Partikel nach Beispiel | Schälwiderstand [N/mm] |
|---|---|---|
| Referenzklebstoff, ohne Partikel (Vergleich) | - | 0,11 ± 0,01 |
| 5 Gew.-% Nanopartikel | 3e | 0,43 ± 0,11 |
| 10 Gew.-% Nanopartikel | 3e | 0,29 ± 0,04 |
| 3,8 Gew.-% Nanopartikel (Vergleich) | Aerosil 200, (ohne Modifikation) | 0,13 ± 0,04 |

Die Ergebnisse zeigen, dass man mit Hilfe der erfindungsgemäßen Partikel in der Klebstoffformulierung nicht nur die mechanischen Eigenschaften der Klebverbindungen deutlich verbessern kann, sondern sogar einander normalerweise entgegen laufende Eigenschaften wie die Schälfestigkeit und Zug-Scher-Festigkeit gleichzeitig verbessern kann.

### Beispiel 5 - Synergistische Wirkung mit Elastomerpartikeln

Es werden Klebstoffe und Fügeteile wie in Beispiel 4 vorbereitet. Zusätzlich werden Klebstoffe mit 5 Gew.-% Genioperl M23A (Wacker) und die Kombination aus 5 Gew.-% Genioperl M23A plus 5 Gew.-% modifizierte Nanopartikel nach Beispiel 3e präpariert. Es werden folgende Klebeigenschaften gemessen:

| | Schälwiderstand [N/mm] | Zug-Scher-Festigkeit [MPa]s |
|---|---|---|
| Referenzklebstoff, ohne Partikel (Vergleich) | 0,11 ± 0,01 | 13,5 ± 1,6 |
| 5 Gew.% GLYMO-modifiziertes Nano-SiO₂, Beispiel 3e | 0,43 ± 0,11 | 18,4 ± 1,7 |
| 5 Gew.% Nano-Silikonpartikel, Genioperl (Vergleich) | 1,64 ± 0,16 | 18,6 ± 1,2 |
| 10 Gew.% GLYMO-modifiziertes Nano-SiO₂ | 0,29 ± 0,04 | - |
| 10 Gew.% Nano-Silikonpartikel, Genioperl (Vergleich) | 1,17 ± 0,24 | - |
| 5 Gew.% Nano-Silikonpartikel + 5 Gew.% GLYMO-modifiziertes Nano-SiO₂, Beispiel 3e | 2,41 ± 0,32 | 25,2 ± 1,1 |
| 9 Gew.% Nano-Silikonpartikel + 9 Gew.% GLYMO modifiziertes Nano-SiO₂, Beispiel 3e | 1,04 ± 0,04 | - |

Die Ergebnisse zeigen eine deutliche synergistische Wirkung zwischen den beiden Partikelarten. Sowohl die Schälfestigkeit, als auch die Zug-Scher-Festigkeit ist deutlich höher als bei einer der Partikelarten alleine. Es ist für den Einzelfall das Konzentrationsoptimum zu ermitteln. Bei zu großem Partikelgehalt gehen die Eigenschaften wieder zurück.

### Beispiel 6 - Präparation von Partikeln mit Methacrylatgruppen

### a) Nanofüllstoffsynthesen

Für die Katalyseversuche wurden die in der folgenden Tabelle zusammengestellten Versuche durchgeführt. Dazu wurde Aerosil 200 (Degussa AG) in einen 1 l Zweihalsrundkolben eingewogen, Lösungsmittel zugegeben und der Kolben kräftig geschüttelt, um das Aerosil zu benetzen. Die zunächst breiige Masse wurde solange mit einem IKA RW 20n (KPG-Rührer, Stufe 3-4) gerührt, bis sich eine homogene flüssige Suspension bildete (ca. 5- 10 min). Anschließend wurde das Methacryloxypropyltrimethoxysilan MEMO (ABCR GmbH & Co.KG) mit einem Tropftrichter zugetropft (1 Tropfen pro Sekunde), danach wurde der Katalysator zugegeben. Nach der Zugabe der Katalysatoren verdicken sich die Suspensionen stark, konnten aber weiter gerührt werden. Nach 10 min bis zu mehreren Stunden wurden die Suspensionen wieder dünnflüssig. Insgesamt wurden die Suspensionen 48 h gerührt. Das Lösungsmittel wurde am Rotationsverdampfer bei einer Badtemperatur von 35°C abgezogen.

Nach dem Entfernen des Lösungsmittels blieben weiße, lockere Pulver zurück. Die Pulver wurden im Umluftofen bei 80°C 30 min nachgetrocknet und anschließend fein gemahlen.

Folgende Versuche wurden durchgeführt:

| Probe Nr. | Aerosil 200 [g] | MEMO [g] | Lösungsmittel | Katalysatorart/ Menge [g] | Bemerkung |
|---|---|---|---|---|---|
| 6a | 56,28 | 35,96 | MEK | DBU/0,784 | verdickt bei Zugabe des Kat., nach 15 min wieder dünnflüssig |
| 6b | 56,58 | 36,90 | MEK | Referenz, nicht katalysiert | keine Verdickung |
| 6c | 56,95 | 36,68 | MEK | MI/ 0,482 | verdickt bei Zugabe des Kat., nach 10-15 min wieder dünnflüssig |
| 6d | 51,35 | 32,10 | EE | DBU/ 0,738 | verdickt bei Zugabe des Kat., nach 20 min wieder dünnflüssig |
| 6e | 51,12 | 32,61 | EE | AMEO/ 0,900 | verdickt bei Zugabe des Kat., nach 10 min wieder dünnflüssig |
| 6f | 51,95 | 33,20 | EE | Referenz, nicht katalysiert | keine Verdickung |
| 6g | 57,90 | 35,57 | MEK | MP/ 0,548 | verdickt bei Zugabe des Kat., nach 30-40 min wieder dünnflüssig |
| 6h | 44,36 | 28,27 | EE | MP/ 0,423 | verdickt bei Zugabe des Kat., nach über 60 min wieder dünnflüssig |
| 6i | 27,11 | 17,07 | MTBE | TMG₃P=N-butyl/ 1,145 | verdickt bei Zugabe des Kat., nach 1 min wieder dünnflüssig |
| 6j | 50,05 | 31,85 | MTBE | TMAH/ 0,42 g | verdickt bei Zugabe des Kat.,erst nach etwa 12 h wieder dünnflüssig |
| 6k | 50,10 | 31,83 | MEK | DBU/ 1,41 | verdickt bei Zugabe des Kat., nach 1 min wieder dünnflüssig |
| 6l | 50,00 | 38,22 | MEK | DBU/ 1,41 | verdickt bei Zugabe des Kat., nach 1 min wieder dünnflüssig |

### b) Thermogravimetrische Analyse TGA

Zur Beurteilung der Anbindung des Silans an die Füllstoffoberfläche wurden die Füllstoffe thermogravimetrisch analysiert, dabei wird die Masseänderung in Abhängigkeit von der Temperatur gemessen.

Typischerweise degradiert der organische Anteil des Füllstoffs in mindestens zwei Stufen. Es wird definiert, das dass physikalisch adsorbierte MEMO bis 200°C entweicht und das chemisch gebundene MEMO oberhalb von 200°C thermisch zersetzt wird. In der folgenden Tabelle sind die Ergebnisse der TGA zusammengefasst. Es ist Ziel einen hohen Gewichtsverlust der 2. Stufe im Vergleich zu der 1. Stufe zu haben.

| Probe Nr. | Lösungsmittel maximum /Katalysator | 1. Peak-maximum [°C] | 2. Peak-maximum [°C] | 1. Masseverlust bis 200°C [%] | 2. Masseverlust ab 200°C [%] | Gesamt masseverlust [%] | |
|---|---|---|---|---|---|---|---|
| 6a | DBU | 102 | 309 | 3,5 | 18 | 21,5 | erf.gem. |
| 6b | MEK/Referenz | 126 | 300 | 35,7 | 3,3 | 39 | Vgl. |
| 6c | MEK/3,6 mol % | 120 | 290 | 25,3 | 8,1 | 33,4 | Vgl. |
| 6d | EE/3,6 mol % DBU | 138 | 304 | 1,6 | 19,4 | 21 | erf.gem. |
| 6e | EE/3,6 mol % AMEO | 114 | 284 | 17,2 | 9,1 | 26,4 | Vgl. |
| 6f | EE/Referenz | 119 | 288 | 30,3 | 3,7 | 34 | Vgl. |
| 6g | MPK/3,6 mol % MP | 122 | 275 | 28,8 | 6,2 | 35 | Vgl. |
| 6h | P3,6 mol % | 119 | 272 | 28,3 | 6,0 | 34,3 | Vgl. |
| 6i | MTBE/3,6 mol % TMP₃P=Nbutyl | 203 | 292 | 3,1 | 13,9 | 17 | erf.gem. |
| 6j | MTBFJ3,6 mol % TMAH | 125 | 288 | 33,8 | 5,2 | 39 | Vgl. |
| 6k | MED/DBU 7,6 mol % | 94 | 298 | 6,3 | 19,6 | 25,9 | erf.gem. |
| 6l | MEK/DBU 7,6 mol%, 20% Silanüberschuss | 95 | 297 | 7,9 | 21,9 | 29,8 | erf.gem. |

Die Ergebnisse zeigen, dass im Vergleich zu den Vergleichsversuchen die erfindungsgemäßen Partikel stets einen höheren Anteil der fest gebundenen Oberflächenmodifikation aufweisen und zudem auch die Temperatur des 2. Peaks höher liegt.

## Patentansprüche

1. Verfahren zur Herstellung von Nanokompositen aus einem organischen Bindemittel und oberflächenmodifizierten Nanofüllstoffen, bei dem Nanofüllstoffe in einem organischen Medium mit einem Silan, Titanat und/oder Zirkonat unter Zusatz einer Base an der Oberfläche organisch modifiziert werden und diese modifizierten Nanofüllstoffe anschließend in das organische Bindemittel eingearbeitet werden,
wobei das organische Medium ein polares Lösungsmittel ist,
**dadurch gekennzeichnet, dass**
als Base eine nicht ionische Base zugesetzt wird, die eine acyclische Base mit einem in Acetonitril gemessenen pK_{BH+}-Wert ≥ 19 oder eine cyclische Base mit einem in Acetonitril gemessenen pK_{BH+}-Wert ≥ 15 ist.

2. Verfahren zur Herstellung von Nanokompositen nach Anspruch 1,
**dadurch gekennzeichnet, dass**
das Silan, Titanat und/oder Zirkonat die allgemeinen Formeln E(OR')ₙR₄₋ₙ besitzt, wobei
- E = Si, Ti oder Zr ist,
- n = 1, 2 oder 3,und bevorzugt n = 3 ist,
- R' eine beliebige organische funktionelle Gruppe, bevorzugt eine Alkylgruppe ist,
- und R eine beliebige organische Gruppe ist.

3. Verfahren zur Herstellung von Nanokompositen nach Anspruch 1 oder 2,
**dadurch gekennzeichnet, dass**
das Silan, Titanat und/oder Zirkonat der allgemeinen Formeln E(OR')ₙR₄₋ₙ gleiche oder verschiedene Reste R enthält, wobei einer, zwei oder drei der gleichen oder verschiedenen Reste R eine oder mehrere funktionelle organische Gruppe R" enthalten, die über einen organischen Linker Z an das Zentralatom E gebunden sind, wobei die funktionelle organische Gruppe R" ausgewählt wird aus der Gruppe bestehend aus Epoxiden, Aminen, Carbonsäuren, Mercaptanen, Alkoholen, funktionellen Gruppen mit polymerisationsfähigen Doppelbindungen, Isocyanaten, substituierten oder unsubstituierten Phenylgruppen.

4. Verfahren zur Herstellung von Nanokompositen nach einem der vorhergehenden Ansprüche, **dadurch gekennzeichnet, dass**
das organische Bindemittel ausgewählt wird aus der Gruppe bestehend aus acrylat- oder methacrylatbasierten Bindemitteln, epoxidbasierten Bindemitteln, Bindemitteln, die Styrol oder einen ungesättigten Polyester enthalten oder hieraus bestehen, Bindemitteln, die Isocyanatgruppen enthalten und Bindemitteln, die Silikon enthalten oder hieraus bestehen.

5. Verfahren zur Herstellung von Nanokompositen nach einem der vorhergehenden Ansprüche, **dadurch gekennzeichnet, dass**
die nicht ionische Base ausgewählt wird aus der Gruppe bestehend aus cyclischen, bicyclischen und polycyclischen Amidinen, Guanidinen, Aminoiminophosphoranen und Phosphazenbasen.

6. Verfahren zur Herstellung von Nanokompositen nach einem der vorhergehenden Ansprüche, **dadurch gekennzeichnet, dass**
die nicht ionische Base einen pK_{BH+}-Wert ≥ 20 besitzt.

7. Verfahren zur Herstellung von Nanokompositen nach den Ansprüchen 5 oder 6,
**dadurch gekennzeichnet, dass**
als nicht ionische Base 1,5-Diazabicyclo[4.3.0]non-5-en und/oder 1,8-Diazabicyclo[5.4.0]undec-7-en zugesetzt wird.

8. Verfahren zur Herstellung von Nanokompositen nach einem der vorhergehenden Ansprüche, **dadurch gekennzeichnet, dass**
die eingesetzten Nanofüllstoffe Oxide oder Silikate sind, vorzugsweise flammpyrolytisch hergestelltes oder gefälltes Siliciumdioxid.

9. Verfahren zur Herstellung von Nanokompositen nach einem der Ansprüche 1 bis 8,
**dadurch gekennzeichnet, dass**
das organische Medium bei der Oberflächenmodifizierung der Nanofüllstoffe ein polar aprotisches Lösungsmittel ist.

10. Verfahren zur Herstellung von Nanokompositen nach Anspruch 9, **dadurch**
**gekennzeichnet, dass**
das polar aprotische Lösungsmittel ausgewählt wird aus der Gruppe bestehend aus Ketonen, Ethern und Estern und bevorzugt ausgewählt wird aus der Gruppe bestehend aus Aceton, Butanon, Methylisobutylketon, Tetrahydrofuran, Essigsäureethylester, Methyl-tert-butylether und Diisopropylether.

11. Verfahren zur Herstellung von Nanokompositen nach einem der vorhergehenden Ansprüche, **dadurch gekennzeichnet, dass**
während der Modifizierung der Nanofüllstoffe und/oder bei der Einarbeitung der oberflächenmodifizierten Nanofüllstoffe in das organische Bindemittel zusätzliche mechanische Energie eingebracht wird, bevorzugt durch Ultraschall, einen Hochgeschwindigkeitsrührer, einen Dissolver, eine Perlmühle oder einen Rotor-Stator-Mischer.

12. Verfahren zur Herstellung von Nanokompositen nach einem der vorhergehenden Ansprüche, **dadurch gekennzeichnet, dass**
das organische Bindemittel ein zur Herstellung von Thermoplasten verwendetes Monomeres ist und das Gemisch aus dem organischen Bindemittel und den oberflächenmodifizierten Nanofüllstoffen nach dem Einarbeiten der oberflächenmodifizierten Nanofüllstoffe in das Bindemittel polymerisiert wird oder in eine Schmelze von Thermoplasten eingearbeitet werden.

13. Verfahren zur Herstellung von Nanokompositen nach einem der vorhergehenden Ansprüche, **dadurch gekennzeichnet, dass**
bei der Oberflächenmodifikation der Nanofüllstoffe zusätzlich zu dem Silan, Titanat und/oder Zirkonat der allgemeinen Formel E(OR')ₙR₄₋ₙ ein Tetraalkoxysilan, -titanat und/oder -zirkonat zugesetzt wird, wobei die molare Menge des Tetraalkoxysilans, -titanats und/öder -zirkonats bevorzugt weniger als 50 mol-% des Silans, Titanats und/oder Zirkonats der allgemeinen Formel E(OR)ₙR₄₋ₙ beträgt.

14. Verfahren zur Herstellung von Nanokompositen nach einem der vorhergehenden Ansprüche, **dadurch gekennzeichnet, dass**
dem organischen Bindemittel zusätzlich Elastomerpartikel zugegeben werden, vorzugsweise Elastomerpartikel, die Polydimethylsiloxan, Polybutadien und/oder Polyisopren enthalten oder hieraus bestehen, wobei die Elastomerpartikel einen mittleren Durchmesser zwischen 10 und 500 nm aufweisen, oder funktionelle organische Gruppen auf der Oberfläche tragen, die in der Lage sind, kovalente Bindungen mit dem organischen Bindemittel einzugehen.

15. Verfahren zur Herstellung von Nanokompositen nach einem der vorhergehenden Ansprüche, **dadurch gekennzeichnet, dass**
zusätzlich zu dem als Oberflächenmodifikationsreagenz eingesetzten Silan, Titanat oder Zirkonat ein weiteres Oberflächenmodifikationsreagenz der Formel Si(OR"')ₘR""₄₋ₘ, bei dem m = 1, 2 oder 3 ist,
R"' eine beliebige organische funktionelle Gruppe ist,
und R"" eine Fluoralkylgruppe ist, eingesetzt wird.

## Claims

1. Process for the production of nanocomposites composed of an organic binder and surface-modified nanofillers, in which nanofillers are organically modified on the surface with a silane, titanate and/or zirconate by adding a base and these modified nanofillers are then worked into the organic binder,
wherein the organic medium is a polar solvent,
**characterised in that** a non-ionic base, which is an acyclic base with a pK_{BH+} value measured in acetonitrile of ≥ 19 or a cyclic base with a pK_{BH+} value measured in acetonitrile of ≥ 15, is added as base.

2. Process for the production of nanocomposites according to claim 1, **characterised in that** the silane, titanate and/or zirconate has the general formula E(OR')ₙR₄₋ₙ, wherein
• E = Si, Ti or Zr,
• n = 1, 2 or 3 and preferably n = 3,
• R' is any desired organic functional group, preferably an alkyl group,
• and R is any desired organic group.

3. Process for the production of nanocomposites according to claim 1 or 2, **characterised in that** the silane, titanate and/or zirconate of the general formula E(OR')ₙR₄₋ₙ contains the same or different residues R, wherein one, two or three of the same or different residues R contain one or more functional organic groups R", which are bound to the central atom E via an organic linker Z, wherein the functional organic group R" is selected from the group comprising epoxides, amines, carboxylic acids, mercaptans, alcohols, functional groups with polymerisable double bonds, isocyanates, substituted or unsubstituted phenyl groups.

4. Process for the production of nanocomposites according to one of the preceding claims, **characterised in that** the organic binder is selected from the group containing acrylate- or methacrylate-based binders, epoxide-based binders, binders containing styrene or an unsaturated polyester or composed thereof, binders containing isocyanate groups and binders containing silicone or composed thereof.

5. Process for the production of nanocomposites according to one of the preceding claims, **characterised in that** the non-ionic base is selected from the group comprising cyclic, bicyclic and polycyclic amidines, guanidines, amino imino phosphoranes and phosphazine bases.

6. Process for the production of nanocomposites according to one of the preceding claims, **characterised in that** the non-ionic base has a pK_{BH+} value of ≥ 20.

7. Process for the production of nanocomposites according to claims 5 or 6, **characterised in that** 1.5-diazabicyclo[4.3.0]non-5-ene and/or or 1.8-diazabicyclo[5.4.0]undec-7-ene is added as non-ionic base.

8. Process for the production of nanocomposites according to one of the preceding claims, **characterised in that** the nanofillers used are oxides or silicates, preferably silicon dioxide produced by flame pyrolysis or precipitated silicon dioxide.

9. Process for the production of nanocomposites according to one of claims 1 to 8, **characterised in that** the organic medium in the surface modification of the nanofillers is a polar aprotic solvent.

10. Process for the production of nanocomposites according to claim 9, **characterised in that** the polar aprotic solvent is selected from the group comprising ketones, ethers and esters, and preferably selected from the group comprising acetone, butanone, methyl isobutyl ketone, tetrahydrofuran, ethyl acetate, methyl-tert-butyl ether and diisopropyl ether.

11. Process for the production of nanocomposites according to one of the preceding claims, **characterised in that** additional mechanical energy is introduced, preferably by means of ultrasound, a high-speed stirrer, a dissolver, a pearl mill or a rotor-stator mixer, during the modification of the nanofillers and/or when the surface-modified nanofillers are worked into the organic binder.

12. Process for the production of nanocomposites according to one of the preceding claims, **characterised in that** the organic binder is a monomer used to produce thermoplastics, and the mixture of the organic binder and the surface-modified nanofillers is polymerised after the surface-modified nanofillers are worked into the binder or are worked into a melt of thermoplastics.

13. Process for the production of nanocomposites according to one of the preceding claims, **characterised in that** in addition to the silane, titanate and/or zirconate of the general formula E(OR')ₙR₄₋ₙ a tetraalkoxysilane, titanate and/or zirconate is added during the surface modification of the nanofillers, wherein the molar quantity of the tetraalkoxysilane, titanate and/or zirconate preferably amounts to less than 50 mole per cent of the silane, titanate and/or zirconate of the general formula E(OR')ₙR₄₋ₙ.

14. Process for the production of nanocomposites according to one of the preceding claims, **characterised in that** elastomer particles are additionally added to the organic binder, preferably elastomer particles containing polydimethyl siloxane, polybutadiene and/or polyisoprene or composed thereof, wherein the elastomer particles have an average diameter of between 10 and 500 nm or carry functional organic groups on the surface, which are capable of forming covalent bonds with the organic binder.

15. Process for the production of nanocomposites according to one of the preceding claims, **characterised in that** in addition to the silane, titanate or zirconate used as surface modification reagent a further surface modification reagent is used which has the formula (Si(OR"')ₘR""₄₋ₘ,
wherein m = 1, 2 or 3,
R'" is any desired organic functional group,
and R"" is a fluoroalkyl group.

## Revendications

1. Procédé de préparation de nanocomposites à partir d'un liant organique et de nanocharges à surface modifiée selon lequel :
on modifie organiquement la surface de nanocharges dans un milieu organique renfermant un silane, titanate, et/ou zirconate avec addition d'une base, puis on introduit les nanocharges ainsi modifiées dans le liant organique,
le milieu organique étant un solvant polaire,
**caractérisé en ce que**
en tant que base on met en oeuvre une base non ionique constituée par une base acyclique ayant un pK_{BH+} mesuré dans l'acétonitrile ≥ 19 ou une base cyclique ayant un pK_{BH}+ mesuré dans l'acétonitrile à 15.

2. Procédé de préparation de nanocomposites selon la revendication 1,
**caractérisé en ce que**
le silane, titanate et/ou zirconate satisfait à la formule générale E(OR')ₙR₄₋ₙ, dans laquelle :
- E = Si, Ti ou Zr,
- n = 1, 2 ou 3 et de préférence n = 3,
- R' est un groupe fonctionnel organique quelconque, de préférence un groupe alkyle, et
- R est un groupe organique quelconque.

3. Procédé de préparation de nanocomposites selon la revendication 1 ou 2,
**caractérisé en ce que**
le silane, titanate et/ou zirconate de formule générale E(OR')ₙR₄₋₄ renferme des radicaux R similaires ou différents, un, deux ou trois de ces radicaux R similaires ou différents renfermant un ou plusieurs groupes organiques fonctionnels R" qui sont reliés à l'atome central E, par l'intermédiaire d'un chainon organique Z, le groupe organique fonctionnel R" étant choisi parmi les époxydes, les amines, les acides carboxyliques, les mercaptans, les alcools, les groupes fonctionnels comportant des doubles liaisons pouvant donner lieu à une polymérisation, les isocyanates, et les groupes phényles substitués ou non substitués.

4. Procédé de préparation de nanocomposites selon l'une quelconque des revendications précédentes,
**caractérisé en ce que**
le liant organique est choisi dans le groupe formé par les liants à base d'acrylate ou de méthacrylate, les liants à base d'époxyde, les liants qui renferment du styrène ou un polyester insaturé, ou sont constitués par ces composés eux-mêmes. Les liants qui renferment des groupes isocyanates et les liants qui renferment des silicones ou sont constitués par ces composés eux-mêmes.

5. Procédé de préparation de nanocomposites selon l'une quelconque des revendications précédentes,
**caractérisé en ce que**
la base non ionique est choisie dans le groupe formé par les amidines cycliques, bi-cycliques et poly-cycliques, les guanidines, les aminoiminophosphoranes et les phosphazénes basiques.

6. Procédé de préparation de nanocomposites selon l'une quelconque des revendications précédentes,
**caractérisé en ce que**
la base non ionique a un pKBH+ ≥ 20.

7. Procédé de préparation de nanocomposites selon les revendications 5 ou 6,
**caractérisé en ce que**
en tant que base non ionique on met en oeuvre la 1,5-diazabicyclo[4.3.0]none-5-ène et/ou la 1,8-diazabicyclo[5.4.0]undec-7-ène.

8. Procédé de préparation de nanocomposites selon l'une quelconque des revendications précédentes,
**caractérisé en ce que**
les nanocharges mises en oeuvre sont des oxydes ou des silicates, de préférence du dioxyde de silicium obtenu par pyrolyse ou par précipitation.

9. Procédé de préparation de nanocomposites selon l'une quelconque des revendications 1 à 8,
**caractérisé en ce que**
le milieu organique mis en oeuvre lors de la modification de la surface des nanocharges est un solvant aprotique polaire.

10. Procédé de préparation de nanocomposites selon la revendication 9,
**caractérisé en ce que**
le solvant aprotique polaire est choisi dans le groupe formé par les cétones, les éthers et les esters et de préférence dans le groupe formé par l'acétone, la butanone, la méthylisobutylcétone, le tétrahydrofurane, l'éthylester d'acide acétique, le méthyl-tert-butyléther et le diisopropyléther.

11. Procédé de préparation de nanocomposites selon l'une quelconque des revendications précédentes,
**caractérisé en ce que**
lors de la modification des nanocharges et/ou lors de l'introduction des nanocharges modifiées en surface dans le liant organique on apporte de l'énergie mécanique supplémentaire de préférence par ultrasons, à l'aide d'un agitateur à vitesse élevée, d'un dissolver, d'un broyeur dynamique ou d'un mélangeur à rotor-stator.

12. Procédé de préparation de nanocomposites selon l'une quelconque des revendications précédentes,
**caractérisé en ce que**
le liant organique est un monomère utilisé pour la préparation de thermoplastes et le mélange du liant organique et des nanocharges modifiées en surface est polymérisé après l'introduction des nanocharges modifiées en surface dans le liant ou est introduit dans des thermoplastes en fusion.

13. Procédé de préparation de nanocomposites selon l'une quelconque des revendications précédentes,
**caractérisé en ce que**
lors de la modification de la surface des nanocharges on ajoute, en plus du silane, titanate et/ou zirconate de formule générale E(OR')ₙR₄₋ₙ un tétraalcoxysilane-titanate et/ou⁻zirconate, la proportion molaire du tétraalcoxysilane-titanate et/ou⁻zirconate étant de préférence inférieure à 50 % en moles du silane, titanate et/ou zirconate de formule générale E(OR')nR₄₋ₙ.

14. Procédé de préparation de nanocomposites selon l'une quelconque des revendications précédentes,
**caractérisé en ce que**
on ajoute en outre au liant organique des particules d'élastomère, de préférence des particules d'élastomère qui renferment du polydimethylsiloxane, polybutadiène et/ou polyisoprène ou sont constitués par ces composants, les particules d'élastomère présentant un diamètre moyen compris 10 et 500 nm, ou portent sur leur surface des groupes organiques fonctionnels qui sont susceptibles de former des liaisons covalentes avec le liant organique.

15. Procédé de préparation de nanocomposites selon l'une quelconque des revendications précédentes,
**caractérisé en ce que**
l'on ajoute en plus du silane, titanate ou zirconate mis en oeuvre en tant que réactif de modification de surface, un autre réactif de modification de surface de formule Si(OR"')ₘR""₄₋ₘ, dans laquelle m = 1, 2 ou 3, R"' est un groupe fonctionnel organique quelconque et R"" est un groupe fluoroalkyle.
